(19) Europäisches Patentamt
European Patent Office
Office européen des brevets

(11) **EP 2 860 935 B1**

(12) **EUROPEAN PATENT SPECIFICATION**

(45) Date of publication and mention
of the grant of the patent:
**14.08.2019  Bulletin 2019/33**

(51) Int Cl.:
***H04L 29/06*** *(2006.01)*

(21) Application number: **13382398.9**

(22) Date of filing: **09.10.2013**

(54) **A COMPUTER IMPLEMENTED METHOD TO PREVENT ATTACKS AGAINST AUTHORIZATION SYSTEMS AND COMPUTER PROGRAMS PRODUCTS THEREOF**

COMPUTERIMPLEMENTIERTES VERFAHREN ZUR VERHINDERUNG VON ANGRIFFEN GEGEN AUTORISIERUNGSSYSTEME UND COMPUTERPROGRAMMPRODUKTE DAFÜR

PROCÉDÉ MIS EN OEUVRE PAR ORDINATEUR POUR EMPÊCHER DES ATTAQUES DIRIGÉES CONTRE DES SYSTÈMES D'AUTORISATION ET LEURS PRODUITS DE PROGRAMMES INFORMATIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.04.2015  Bulletin 2015/16**

(73) Proprietor: **Telefonica Digital España, S.L.U.**
**28013 Madrid (ES)**

(72) Inventors:
• **Alonso Cebrián, José María**
**28013 Madrid (ES)**

• **Barroso Berrueta, David**
**28013 Madrid (ES)**
• **Palazón Romero, José María**
**28013 Madrid (ES)**
• **Guzmán Sacristán, Antonio**
**28013 Madrid (ES)**

(74) Representative: **Carlos Hernando, Borja et al**
**Garrigues IP, S.L.P.**
**Hermosilla, 3**
**28001 Madrid (ES)**

(56) References cited:
**US-A1- 2003 046 551     US-A1- 2011 072 507**

**Description**

Field of the art

The present invention is directed, in general, to authentication and authorization systems, and more particularly to a computer implemented method and computer program products to prevent attacks against authorization systems in which the access to different resources and actions defined for a user is controlled for instance by a service provider.

Background of the invention

In recent years, web fraud detection market has increased considerably, so innovation in authentication and authorization processes has become of great importance.

The increasing complexity of applications has led to the adoption of many security techniques increasingly sophisticated. One of the classifications that can be proposed for the study of these security techniques allows distinguishing between authentication solutions and authorization solutions. The authentication techniques are designed to verify a person is the one who claims to be. In order to add more reliability in verifying that actually a person corresponds to the identity that is being checked, many alternative authentication schemes can be taken or the number of factors to build this authentication can be extended. Once a user is identified, it has to be determined what resources can be accessed and how this access can be performed. This is the duty of the authorization models.

There are many solutions designed to strengthen the authentication processes and, by extension, to fortify the authorization processes. There are authorization schemes that allow flexibility and robustness in assigning permissions to users to ensure secure access to system resources. However, there are threats which cannot yet be thwarted by adopting any of the existing schemes for the authentication/authorization, or this adoption is too expensive to afford it. These threats directly affect the way the access to specific resources is performed. A method to address these threats involves the designing of brand new security mechanisms. These mechanisms must guarantee that once the identity of a user has been verified and the level of authorization to a resource for this user has been checked, the actions taken by the user of that resource are not intercepted and modified by any attacker.

Within the category of authorization, different techniques that facilitate access to various system resources are included. The user role information, the access control data provided when the user is authenticated, are examples of information that can be used to determine whom to give access to what resources and how this access has to be guaranteed. Ultimately, determining what should be accessed by the users, will be specified for each application. For this reason, sometimes it will be difficult to provide a general authorization scheme. It will be necessary to define an application-specific logic to determine which users can access and how they perform these accesses. From this idea, there are many solutions that propose secure and flexible schemes for the implementation of the authorization. In all these solutions, the security must be guaranteed by the correct selection of the authentication mechanism and a correct implementation of the selected authorization scheme.

Some of the solutions provide the flexibility by defining their own SDK to encourage the use of their schemes for authentication/authorization. Today, most of the SDK are based on concepts introduced by OAuth and do not suppose a risk by themselves. This applies to Microsoft Live Connect, Facebook PHP SDK and Windows 8 SDK Authentication Broker. If they exist, the threats should come from a deficient use of these SDK. In fact, regardless of threats derived by a poor implementation of the scheme chosen, most of the threats that can be defined on an authorization system coincide with the threats defined for authentication systems. This coincidence has to do with the misuse of the credentials used to manage permissions granting access to resources [2], [5].

In [2] four different levels are defined in terms of the consequences of authentication and authorization errors and misuse of credentials. Level 1 is the lowest level (the most insecure) and level 4 is the highest.

- Level 1- An attacker can perform repeated logon trials by guessing possible values of the token authenticator. An attacker is also able to replay previously captured messages (between a legitimate user and a verifier) to authenticate as that user to the verifier. National Instute of Standars and Technology (NIST) recommends the usage of a single or multi-factor authentication with no identity proof in order to provide protection against these online guessing and replay attacks.

- Level 2- An attacker can listen passively to the authentication protocol to capture information which can be used in a subsequent active attack to masquerade as the user. NIST recommends the usage of single or multi-factor authentication to provide protection against these eavesdropping attacks and all the attacks from the level 1.

- Level 3- The attacker positions himself or herself in between the user and verifier so that he or she can intercept and alter the content of the authentication protocol messages. The attacker typically impersonates the verifier to the user and simultaneously impersonates the user to the verifier. Conducting an active exchange with both parties simultaneously may allow the attacker to use authentication messages sent by one legitimate party to successfully authenticate to the other. NIST recommends the usage of a multi-factor authentication and wide use of OTP. It also suggests a token used for authentication to be unlocked by the user using a password or biometrics. Adopting these solutions provides protection against verifier impersonation attacks, MitM attacks and the attacks from level 2.

- Level 4- An attacker is able to insert himself or herself between a user and a verifier subsequent to a successful authentication exchange between the latter two parties. The attacker is able to pose as a user to the verifier or vice versa to control session data exchange. On the other hand, the attacker may compromise or otherwise exploit authentication tokens and may intercept all input or output communications from the device (Man-in-the-device (MitD) attacks or Man-in-the-Browser (MitB) attacks). The attacker can do this infecting the system with malware. NIST suggests employing Multi-factor authentication with FIPS-140-2 certified tamper-resistant hardware (hardware tokens) [4] to get protection against these session hijacking attacks and the attacks from the level 3.

For the first three levels, attacks and existing solutions are both focused on the way of verifying the user's identity. At level 4, NIST proposes the use of solutions against session hijacking and others attacks over authentication processes. This session hijacking involves an attacker takes advantage of the legitimate exchange of credentials that a user makes to comply with the authentication process. Once this validation is accomplished, the attacker then intervenes in the communication that takes place. This type of attack can be implemented in two ways: actively acting, hijacking the connection and leaving out of it to the legitimate user, or, remaining hidden and modifying the content of communication transparently to the user. Whatever the implementation of this attack, it is important to observe that this is an attack aimed at breaking the authorization system, leaving intact, though useless, the authentication system. Although there are alternatives to proactively protect systems from this threat, there is no adequate solution to mitigate the effects of the attack once the device from which the resource access is requested, is committed.

NIST suggests employing FIPS-140-2 certified tamper-resistant hardware (hardware tokens) [4]. Using these devices provides the users the ability to generate a single use password (one time password, OTP) to prove their identity to each transaction. In addition, there are hardware implementations of these tokens that can generate other OTPs coded to contain information on how to complete a specific transaction.

Different criteria can be defined to establish comparison between authentication/authorization schemes. In [1] the authors suggest the need to define three criteria in order to perform an effective comparison. These aspects are: security, usability and complexity on implementation (deployability). This paper presents an intensive study to instrument the comparison through the definition of metrics. Following table summarizes the metrics defined for each criterion.

| Usability | Memory-Effortless |
| | Scalable-for-Users |
| | Nothing-to-Carry |
| | Physical-Effortless |
| | Easy-to-Learn |
| | Efficient-to-Use |
| | Infrequent-Errors |
| | Easy-recovery-from-Loss |
| Deployability | Accessible |
| | Negligible-Cost-per-User |
| | Server-Compatible |
| | Browser-Compatible |
| | Mature |
| | Non-Proprietary |
| Security | Resilient-to-Physical-Observation |
| | Resilient-to-Targeted-Impersonation |
| | Resilient-to-Throttled-Guessing |
| | Resilient-to-Unthrottled-Guessing |
| | Resilient-to-Internal-Observation |
| | Resilient-to-Leaks-from-Other-Verifiers |
| | Resilient-to-Phishing |

(continued)

| |
|---|
| Resilient-to-Theft |
| No-Trusted-third-Party |
| Requiring-Explicit-Consent |
| Unlikable |

In the case of security criterion, the proposed metric set summarizes all the aspects that are usually estimated in defining a threat model. In the definition of these models it is necessary to adopt a number of decisions. And these decisions define the working scenario. For example in the case of OAuth 2.0 [5] the adopted assumptions are as follows:

- The attacker has full access to the network between the client and authorization servers and the client and the resource server, respectively. The attacker may eavesdrop on any communications between those parties. He is not assumed to have access to communication between the authorization server and resource server.
- An attacker has unlimited resources to organize an attack.
- Two of the three parties involved in the OAuth protocol may collude to mount an attack against the third party. For example, the client and authorization server may be under control of an attacker and collude to trick a user to gain access to resources.

Attending to the metrics introduced above, is possible to determine that solutions corresponding to the higher security level (level 4) have poor performance in deployability and usability. Once the assessment of a system allows to determine in which level has to be deployed its authentication system, it is needed to evaluate if the users are authenticated safely and correctly. Although there are some tools that aid in this task [3], [6], deploys in the level 4 are difficult to evaluate correctly. In terms of usability, the use of tampering resistant hardware tokens goes against the adoption of these solutions by users, and it has been proved that this situation leads to a misuse of the credential systems. These tokens are expensive. They are independent device that the user has to custody and that can be employed with one service provider only. If the users have to deal with more than one service provider that has adopted these tampering resistant hardware tokens, they have to take into as custody many tokens as service providers they have.

Furthermore, in terms of authorization, in [7] the authors explain that, aside from some security issues of each SDK, developers who choose to integrate with one of them make assumptions that can lead to security problems. This is because SDKs are often not well documented and security exploits nearly always stem from attackers who find ways to violate these assumptions system implementers relied upon.

Along with these difficulties, other problems must be considered to understand the constant increase in fraud arising from the theft of digital identities. For instance, it is not possible to measure a homogeneous security level in all users' digital accounts. It is needed a solution that can equalize the security level of all digital accounts that a user owns. This solution should extend this security not only to the authentication processes but also to the resource authorization processes and all procedures related to such accounts.

It is also necessary to reduce the risk assumed when some of the resources and procedures associated with digital accounts that can be accessed by users after an inadequate identification are allowed. An example of this situation is the fraud involved in the procedures that allow performing a transaction (i.e. a payment) with credit card number without verifying that whoever is making the transaction is actually the legitimate user (Card Not Present (CNP) fraud). The existent solutions to minimize the risk related with this threat are based on the use of hardware token provided by the first servers (i.e. banks). However, these solutions present several disadvantages that have led to conclude that a better solution is needed.

US 2011/072507 A1 provides a system and method for establishing a secure tunnel between a client device and a remote server utilizing multiple user identities. In some embodiments, it is also provided a client device identity to authenticate access to the remote server.

US 2003/046551 A1 provides a method of accomplishing two-factor user authentication, comprising providing two separate user authentication methods, enabling a user to communicate authentication data for both authentication methods to a first web site using the internet, and enabling the communication of at least some of the authentication data from the first web site to a second web site also using the internet. Both web sites are thus involved in user authentication using the authentication data.

Therefore, a different approach is needed, to improve the overall security in the authentication/authorization systems, whatever is the scheme or schemes adopted, minimizing the impact on the usability and deployability of these systems, and especially preventing CNP fraud.

References:

[1] Bonneau, J., Herley, C., van Oorschot, P. C., & Stajano, F. (2012, May). The quest to replace passwords: A framework for comparative evaluation of web authentication schemes. In Security and Privacy (SP), 2012 IEEE Symposium on (pp. 553-567). IEEE.

[2] Burr, W. E., Dodson, D. F., & Polk, W. T. (2006). Electronic authentication guideline. NIST Special Publication, 800, 63.

[3] Dalton, M., Kozyrakis, C., and Zeldovich, N., Nemesis: Preventing Authentication & Access Control Vulnerabilities in Web Application, In Proceedings of the 18th conference on USENIX security symposium, (pp. 267-282) USENIX Association.

[4] Evans, D., Bond, P., Bement, A., Security Requirements for Cryptographic Modules, FIPS PUB 140-2 - FEDERAL INFORMATION PROCESSING STANDARDS PUBLICATION. Online Resource: http://csrc.nist.gov/publications/fips/fips140-2/fips 1402.pdf

[5] McGloin M. & Hunt P. (2013, January) OAuth 2.0 Threat Model and Security Considerations. ISSN: 2070-1721. Online resource: http://tools.ietf.org/pdf/rfc6819.pdf.

[6] Sun, F., Xu, L., & SU,Z. (2011,August) Static detection of Access control vulnerability in web applications. In Proceedings of the 20th USENIX conference on Security (pp. 11-11). USENIX.

[7] Wang, R., Zhou, Y., Chen, S., Qadeer, S., Evans, D., & Gurevich, Y. (2013). Explicating SDKs: Uncovering Assumptions Underlying Secure Authentication and Authorization (Vol. 37). Microsoft Research Technical Report MSR-TR-2013.

Description of the Invention

To achieve the above, the invention provides a method and a program as defined in independent claims 1 and 12. Particular embodiments are defined in the dependent claims. The invention aims to prevent several attacks related with authentication and authorization processes. This solution is designed to limit the time in which an attacker is able to develop an attack. Therefore, it supposes a limit on the resources available to an attacker to organize and attack. First, the invention seeks to reduce the risk of an attack directed to an authentication/authorization process by temporarily blocking the operation execution mechanism. Thereby decreasing the period of exposure of these systems and, therefore, decreasing the chances of success of attack on the system. In addition, a first server or service provider can force the use of a second authentication phase (using an OTP infrastructure) for service providers who do not provide this option in their account management processes or even let the user activate it.

The proposed solution uses a Near Field Communication (NFC) technology to prevent said CNP fraud. The user may use a NFC token to elude attacks that are based on the stealing of credentials and are focused on acquiring privileges over critical operations. Two different scenarios can be supposed. One possibility can be that a first server issues a particular NFC card to its users and allows them to link this card with the execution of some of the operations through said server. In this case, a cryptographic mechanism can be implemented to avoid a card can be cloned or faked. Other alternative supposes that it is possible to associate any NFC card the user has. This latter case is designed for lower security applications where the token duplication is an acceptable risk. In both cases, the usage of this kind of token supposes an extra factor to mitigate the CNP fraud, because, even in the lower security case, an attacker has to have stolen three factors (for example, credit card number, username/password with the said second server and the NFC card associated with the card Internet payment) to be successful in the attack. In both cases, the presence of a NFC reader should be built within a user's dedicated program and it is supposed that said first server instructs the user to properly use this NFC cards.

According to a first aspect there is provided a computer implemented method to prevent attacks against authorization systems, comprising: receiving at least one first server a request in the name of a user to be logged into a service of said first server; and authorizing said request, said first server, by verifying user identification information of said user.

On contrary of the known proposals, and in a characteristic manner, in order said request to be authorized the method further comprises:

- sending, by said first server to a second server in connection with a user computing device with a dedicated program, a request about a status associated to said user;
- initializing a credential exchange between said first and second server in order to provide mutual authentication;
- verifying said associated status that has been previously set as valid or as invalid by said user and stored in a memory of said second server;

- sending, said second server, said associated status to said first server; and
- using said first server said received associated status for:

  ○ authorizing said request to be logged into a service in the name of said user if said associated status is set as valid, or
  ○ rejecting said request to be logged into a service if said associated status is set as invalid,

wherein in case said request to be logged into a service of said first server being authorized and a request is done in the name of said user to perform an operation in said first server using at least a part of the resources of said first server, the method comprises following steps:

- matching, by said first server, if said operation request corresponds with an entry regarding an scheme entry status defined by the first server for an account of the user;
- associating at least a hardware token such as a Near Field Communication (NFC) card to said operation;
- said first server requesting to said second server an associated status for said operation;
- initializing a credential exchange between said first server and said second server;
- evaluating, said second server a scheme entry status information from a root to said entry;
- sending, said second server, the result of said scheme entry status information evaluation to said first server, and
- using, said first server, the result of said evaluation for allowing or blocking said request in the name of said user to perform said operation.

The status request associated to the user comprises the sending of a security token, said security token being generated during a previous pairing user accounts process. This token links the user with the first server without disclosure of any personal information of the user to the second server information. Then, the token is securely stored in a memory of the first server and in a memory of the second server once the user has configured the pairing of the first and second servers' identifications.

The credentials exchange to secure mutual authentication between the first server and the second server, is performed, preferably, via a standard authentication procedure based on certificates' exchange defining, as a result, a secured channel. The exchange is performed to verify that both first server and second server are who they claim to be.

The second server may notify the user in case said request to be logged into a service of the first server is rejected. For instance, by the sending of a Short Message Service (SMS), of an email, of or a message by a smartphone messenger application, or just by the highlighting or pushing in said dedicated program of said user computing device.

The associated status is set as valid (unlocked) or as invalid (locked) a certain period of time and can be modifiable by the user whenever the latter want it. For instance, the user can plan a locking/unlocking policy to automate the management of their accounts held with different servers using different criteria: time, geo-localization (different policies for home, work, etc.). Another possibility for modifying said associated status can be by delegating the control said user has of their accounts to other users. This can be done by considering two different options. In the first one, a parental control mechanism is used so the children's (original) accounts access control is delegated to the parent control mechanism. In the second one, a single account allows multiple locks. In this latter case, the unlock action will require that multiple users unlock their locks concurrently. In both cases, the delegation is performed securely maintaining the privacy of every user unchanged.

The request to be logged into a service and/or the request to perform an operation may be recorded in order to provide statistics. In this way, the user can obtain system usage statistics that reflect activity of the system and track the attempts of impersonation. These statistics inform about when someone had attempted to access to a service with user's username.

In an embodiment, previous to said step of associating the hardware token, the first server demands to the user the information needed to perform said operation. Then, the first server performs said requesting of the status associated to said operation upon receiving said information needed. According to this embodiment, the second server, in said step of sending the result of the scheme entry status information evaluation to the first server also sends, by means of the dedicated program, an indication about a usage of a card confirming a physical presence action of said user. That is, the first server is informed if a CNP has occurred.

In case, the usage of a card confirming physical presence action of the user has been indicated as happening or occurred, the second server requests to said user through said dedicated program to send said hardware token; then the second server checks whether said hardware token received through the dedicated program matches with said associated hardware token concerning said operation; and establishes the state of said operation taking into account the result of said checking.

In an embodiment, in the step of associating said hardware token this hardware token may be associated by introduction of the user in said second server and validated by the second server. A second factor authentication may be used within the answer of said scheme entry status. This second factor authentication involving:

- sending, said second server an OTP to the first server within the answer of the request;
- requesting, the first server to the user, an OTP that the user is going to use as temporal second factor;
- sending, the second server the same OTP sent to the first server to the user through said another user dedicated program;
- recovering, the user, said requested temporal second factor OTP through said dedicated program, introducing it into said another user dedicated program and further sending it via said another user dedicated program to the first server; and
- checking, the first server, if the received OTP from the second server and the received temporal second factor OTP from said another user dedicated program matches in order to allowing or blocking said request in the name of said user to perform said operation.

The subject matter described herein can be implemented in software in combination with hardware and/or firmware, or a suitable combination of them. For example, the subject matter described herein can be implemented in software executed by a processor.

According to another aspect there is provided a computer program comprising computer program code means adapted to perform the steps according to the method of claim 1 when said program is run on a computer, a digital signal processor, a field-programmable gate array, an application-specific integrated circuit, a micro-processor, a micro-controller, or any other form of programmable hardware.

Embodiments of the invention also embrace a computer program product including program code means adapted to perform a second factor authentication according to the method of claim 6.

Therefore, the present invention allows the user to use the hardware token associated with the operations to prove that the legitimate user knows that the operations have been requested. The user can mitigate the fraud related with the operations provided by different service providers when these operations are performed on the base that the user is the legitimate owner of particular information needed for the operation but without the chance of verifying this fact (i.e. card not present operations).

Moreover, the invention also allows the user to: plan a locking/unlocking policy to automate the management of accounts held with different servers using different criteria: time, geo-localization (different policies for home, work, etc.); delegate the control of their accounts to other second server users; enable monitoring systems that allow users to be warned of identity theft attempts or untrue user's impersonation in operation execution requests, providing a course of action to take action to control the digital identity; establish a second factor for authentication for verifiers that are not providing it; establish an account to be blocked or unblocked and change it with immediate effect by the use of a switch control; fix a schedule to Valid/Invalid (Lock/Unlock) an account or said operation automatically based on time and date settings. Once a check-status request is received the second server responds based on the current state of the scheduler; improve the security level of an account or said operation by configuring a second factor authentication integrated with second server; control different actions associated with an account, authorizing or banning the execution of them in a compatible manner with the authorization scheme established. This control is not limited to a lock/unlock command. In fact, it can be applied the same concepts introduced to control the authentication process (scheduling, second factor, etc.) and take advantage of the invention and make use of digital certificate to be authenticated by any service provider bypassing the password introduction.

The invention permits homogenizing the security level for all the different accounts a user has. It allows offering a security level comparable with level 4 defined by NIST. And this is done for different accounts that can be now controlled with only one device and regardless of the authentication/authorization scheme defined for every service provider.

The invention does not propose any new authentication/authorization scheme. Indeed, the intention is to complement the existent schemes to increase their security adding an extra security layer. Although this may limit its usability and deployability, the invention design is oriented to minimize the impact over these criteria. As it is stated before, the authentication scheme choice determinates the security risk that is assumed for an authorization system. What is proposed here is to reduce the risk taken with the choice of any authentication/authorization mechanism reducing the time in which this system is accessible to be broken.

Assuming that there is a relationship between the success and failure of an attack on the authorization system with the time in which this system is accessible (exposure time) as conditional probability (p (SuccessfulAttack | exposed)) is possible determining that the relative risk (RR) satisfies the following expression:

$$RR = \frac{p(SuccessfulAttack|\text{exposed})}{p(SuccessfulAttack|\text{unexposed})} > 1 \qquad \text{Eq. 1}$$

In this expression it is assumed that the probability of success of an attack is directly related to the exposure time. That is, the continuous exposure of a computer system, in this case the authentication system, increases the likelihood of success of an attack in contrast with a scenario in which the exposure is limited. In the same way one can evaluate the following expression:

$$\frac{\dfrac{p(\text{SuccessfulAttack}|\text{exposed})}{p(\text{FailedAttack}|\text{exposed})}}{\dfrac{p(\text{SuccessfulAttack}|\text{unexposed})}{p(\text{FailedAttack}|\text{unexposed})}} > 1 \qquad \text{Eq. 2}$$

Indicating that there is a greater probability for a successful attack if exists a continued systems exposure. It is also possible to estimate the portion of all successful attacks that could have been avoided if the exposure had been avoided (ARP). This is calculated with expression 3.

$$ARP = \frac{RR - 1}{RR} \qquad \text{Eq. 3}$$

This expression allows assessing the investment required to enable a solution designed to reduce the time that is accessible authentication process. The professional experience and technical knowledge of the documented attack techniques to break authorization systems confirm the assumption made earlier (RR> 1). Therefore, it can be asserted that ARP> 1 once the invention is adopted.

This reduction in the exposure time allows mitigating the effects of most of the threats related with the authentication phase before a user can access to some privileged resources. This invention also permits reducing the exposure of particular actions that can be taken after the login process has been accomplished. Therefore, this exposure reduction supposes the limitation in the time in what the action can be executed and the establishment of a channel that allows to send critical information to assure the integrity of this action execution.

The invention encompasses the solutions for the threats defined by NIST. But, in this case, these solutions are provided to users through a dedicated program designed to be executed in a mobile device, which facilitates the interaction with a second server. In addition, this second server brings privacy in the communications relative to the control of the user's accounts and incorporates all the control information that the users have set about the actions the service providers have offered them.

Brief Description of the Drawings

The previous and other advantages and features will be more deeply understood from the following detailed description of embodiments, with reference to the attached, which must be considered in an illustrative and non-limiting manner, in which:

Figure 1 is an illustration of the present invention general architecture.
Figure 2 is a flow diagram illustrating an account pairing sequence with authorization.
Figure 3 is a flow diagram illustrating how a status of a user account can be checked for authentication.
Figure 4 is a flow diagram illustrating a generalization of figure 3 concerning the operation status verification process.
Figure 5 is a flow diagram illustrating a first option for mitigating CNP fraud, according to a first embodiment of the present invention.
Figure 6 is a flow diagram illustrating the complete process followed by the present invention for mitigating CNP fraud, according to a second embodiment of the present invention.

Detailed Description of Several Embodiments

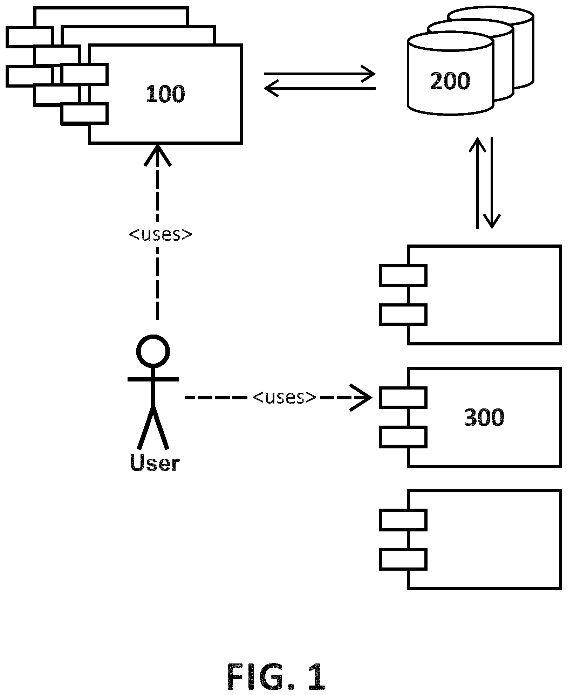

In reference to Figure 1 it is showed the general architecture of the present invention. Concerning Figure 1, a user computing device 100 such as a mobile phone, a smartphone, a tablet-PC or a PDA among any other, is used by said user in order to login into a dedicated program 102 in communication with a second server 200 and to manage the status for every first server 300 with which a user wants to request a service.

With this new proposal said user 100 can unblock said operation defined for a particular account created with said first server 300. As stated below, this action can enhance the control defined for this account by decision of the first server 300. In this decision, the first server 300 can choose to incorporate a new control of security beyond the block/unblock default option or the second factor of authentication. This control of security consists of to provide a communication channel from the user 100 to the first server 300, through the second server 200. The first server 300 can configure the system to ask the user 100 for a particular information related to said operation to be performed. This information can be used by the second server 200 to verify if the user 100 is who actually is demanding said operation and to confirm if the operation that has arrived to the first server 300 is exactly as the one the user 100 had ordered.

Assuming that the first server 300 could want to verify the integrity of the operation, it can be selected what parameters are critical to ensure the operation integrity. In this case, it is important that the requested information corresponds univocally with the operation critical parameter in order to identify it correctly.

In this architecture, the user 100, besides having an account in the second server 200, can have multiple accounts with different service providers. One of these service providers is the first server 300. Once the user 100 completes the login process with these accounts he or she will have access to multiple operations specific to each service providers. The second server 200 eases how a first server 300 can integrate this control within the logic of its applications.

When a first server 300 decides to integrate its services, it will provide the ability to link their accounts with the accounts that the user 100 has in the second server 200. When the said user 100 decides to establish this link, she or he starts a pairing process that ensures complete privacy to the user 100. Once the pairing process is completed, the user 100 can access the configuration of the control of the account with the first server 300 from a dedicated program 102 (i.e. a mobile application).

Every time the settings associated with an account are changed on said mobile application, this modification is immediately propagated to the second server 200 to change the status of the account that can be accessed by the first server 300.

Second server core implements the main function of the second server 200: lock or unlock said user account with the first server 300 and the operations provided by first server 300. In order to do that, the second server 200 accepts and processes the check-status requests sent from the first server 300. This second server 200 also manages all data about the links with said first server 300 defined by the user 100 and the requests for the pairing of new locks. The key is the user 100 is never asked for any private information. Once the user 100 creates his account with second server 200, he can establish locks with different service providers, like said first server 300. To activate these locks the second server 200, according to an embodiment, generates a token. A unique token and the definition of secured channels are needed to complete the pairing process between the user 100 and the first server 300. As result of this pairing process, the cryptographic token is sent from the second server 200 to the first server 300 who has to store this information with their user's personal data. Later, this cryptographic token will be used to request the corresponding lock status. The user 100 can modify the status of their locks, by the activation or configuration of the different options that second server 200 provides.

In case the user 100 has set up a lock with a second factor for authentication over an account or a particular action, the second server 200 will incorporate all the needed logic for the generation and communication of the OTP. When the second server 200 receives a request from the first server 300 asking for the user account status, a second factor of authentication is triggered. An OTP is generated and sent to the user 100. The same OTP is sent to the first server 300 along with the account status. If the status is ON and the user 100 has activated the second factor, the first server 300 should prompt the user to introduce the OTP to proceed with the operation.

Now, if the user 100 has set up a lock over a said operation with an integrity factor to verify that the operation parameters have not been modified, said second server 200 incorporates the needed logic to get the critical information from the user 100 and from the first server 300 and to check if both are equal. The second server 200 sends the result of the checking as the account status to the first server 300. In case of mismatching, the first server 300 can conclude that an intruder can be intercepting the information from the user 100. The first server 300 can then build mechanisms to elude the fraud and to raise security alerts.

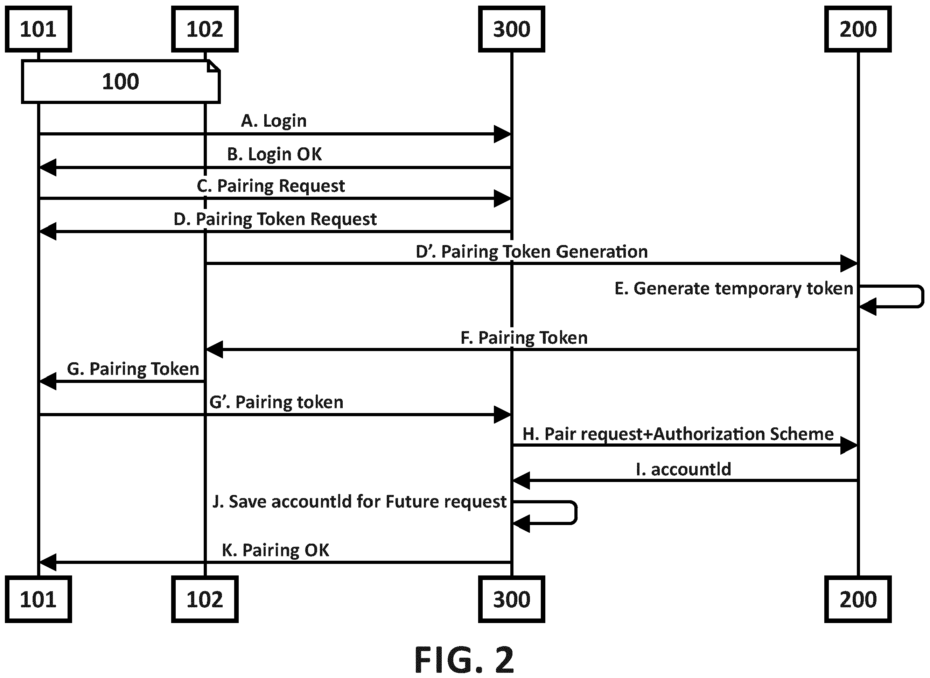

In reference to Figure 2 it is illustrated a pairing process of the user 100 account of the second server 200 with different accounts for different first servers 300. In Figure 2, once a user 100, using for instance the dedicated program 101 such as a browser, has completed the login process (A-B) with a first server 300 (in this particular case a Bank online, a social network, a credit card providers, etc.), the user 100 decides to perform said accounts' pairing process. The user 100 requests the pairing to the first server 300 (C) using the browser 101. As response, the first server 300 asks for a pairing token (D). The user 100 then uses the dedicated program 102 (D') to get this pairing token from the second server 200, after a previous login process. The second server 200 generates a token (for instance as an OTP) (E) and sends it to the user's dedicated program 102 (F). This token can be used for several pairing processes meanwhile it is valid. The user get the token (OTP) from the dedicated program 102 and introduces it in the web page displayed in the browser 101 by the first server 300 (G-G'). The first server 300 then sends the received token to the second server 200, after a previous credentials exchange (H). If the first server 300 identity is validated, the second server 200 stores the link between the user 100 and the first server 300 and generates a new token that identifies this link. This token (accountID) is sent to the first server 300 (I) and there it is stored for future communications (J). At last, a pairing acknowledges is sent to the user's browser 101 (K).

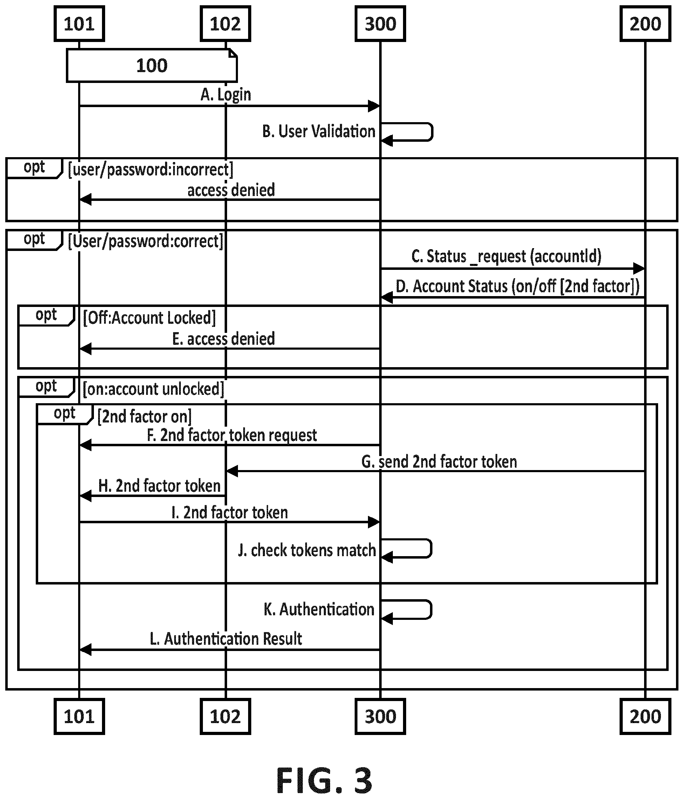

In reference now to Figure 3 it is illustrated how a status of a user account can be checked for authentication. In Figure 3, a user 100, using for example a browser 101, requests to be logged in a service (A) of a first server 300 so once user existence has been validated (B) by said first server 300, the latter demands to the second server 200 the user account status (C). Then the second server 200 initializes the credentials exchange before the result of the account status information is sent (D). With the result status, the first server 300 makes the decision of allowing or blocking the user access (E).

In an embodiment, if the account status is unlocked or valid but the second factor of authentication is on, within the answer of the status request, the second server 200 sends an OTP to the first server 300 that has to employ to complete the authentication. The first server 300 then requests to the user 100 the OTP that is going to be a temporal second factor (F). Then the second server 200 sends the same OTP to the to the user's dedicated program 102 (G). The user 100 recovers the OTP from the dedicated program 102 and introduces it in the browser 101 (H) and sends it to the first server 300 (I). The first server 300 can check if the OTP sent through the browser 101 matches with the one received with the account status (J). Depending on of the results of this verification, the first server performs the authentication process (K) and communicates the result to the user via 101.

When a first server 300 sends a Status_Request, the second server 200 understands that someone, with the proper service identification information (i.e. ID and password), is trying to access to the service. If the account status is set as blocked, or if this request has come in a moment that is not included in the interval defined by the user 100, the second server 200 registers this event as a fake attempt. The second server 200 could send, according to an embodiment, an alert of this event to the user if said user has configured it so (for instance by sending a Short Message Service (SMS), an email, a message by a smartphone messenger application, by a highlighting or pushing in said dedicated program 102 of said user computing device 100, etc.) or just update the statistics for a later revision. Then the second server 200 returns the status associated with the account as locked.

With the aim of improving the security of any authorization system, the use of the second server 200 is proposed as a new layer that gives the users the chance of control the access to the resources and procedures associated with their accounts defined with any first servers. These resources and procedures are seen as operations which depend on the main actions defined for an account (i.e. login process). This dependency is established like a hierarchy where the changes in the root entries are propagated to their children.

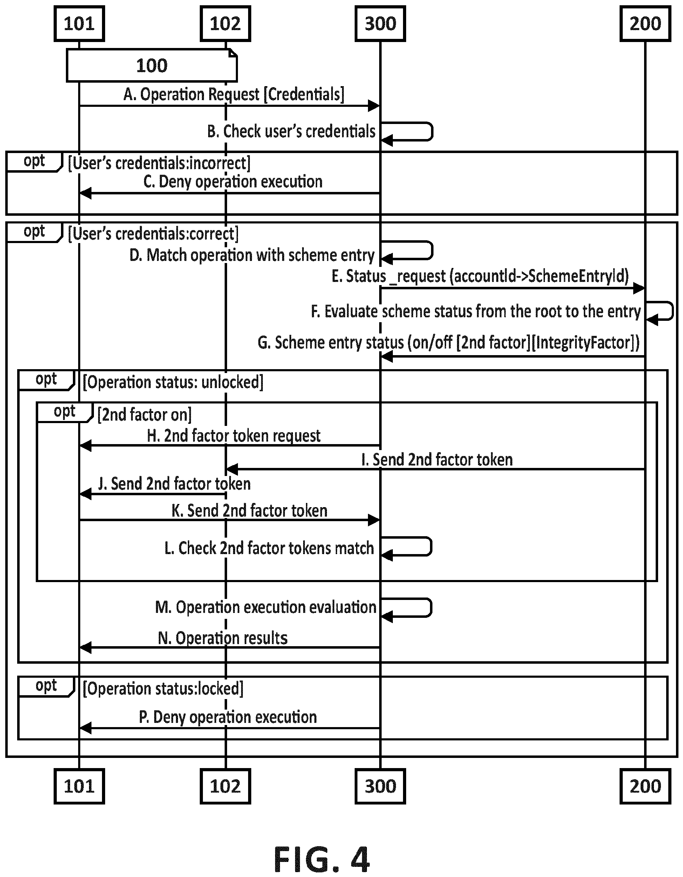

Figure 4 illustrates the operation status verification process of an operation requested by the user 100. This operation is proposed by the first server 300 attached to the account management. The user 100, using for example a browser 101, requests, according to an embodiment, to execute an operation related with an account (A) of a first server 300. This operation can be to be logged in a particular service or to execute some other action related with the services provided by first server 300 (e.g. Internet payment with a credit card). So once user existence has been validated (B) by said first server 300, the latter makes the correspondence of the operation requested with the scheme entry in the hierarchy defined by this user's account (D) and demands to the second server 200 this entry status (E).

Then the second server 200 initializes the credentials exchange before evaluating the scheme entry status from the root to the entry (F). The status of the user's account is retrieved and if it is unlocked the same evaluation is performed with every step founded until reach the scheme entry. The scheme entry status information is sent (G) and, with this information, the first server 300 makes the decision of allowing or blocking the user access to the operation.

The second factor of authentication can be activated if the scheme entry status is unlocked in order to strengthen the process. The second server 200 sends an OTP to the first server 300 within the answer of the status request. This first server 300 has to employ it to complete the authentication. The first server 300 requests to the user 100 the OTP that is going to be a temporal second factor (H). The second server 200 sends the same OTP to the to the user's dedicated program 102 (I). The user 100 recovers the OTP from the dedicated program 102 and introduces it in the browser 101 (J) and sends it to the first server 300 (K). The first server 300 can check if the OTP sent through the browser 101 matches with the one received with the account status (L). The first server 300 denies operation execution if the OTPs don't fit.

Then, in order to mitigate the effects of CNP fraud, the invention proposes two different options or embodiments. As said before, a NFC token may be used in this case by the user 100 to avoid attacks.

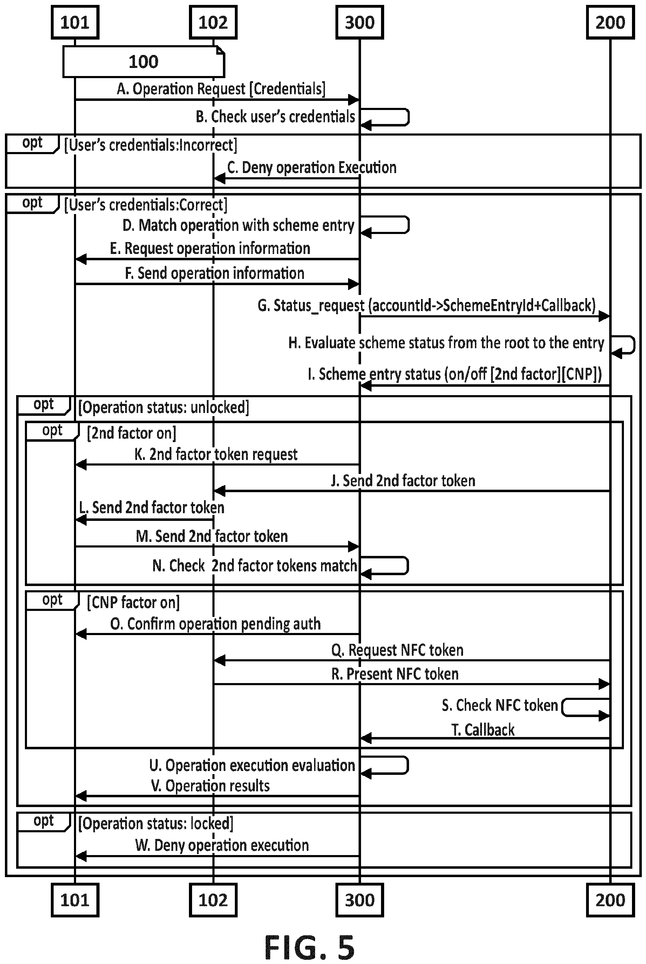

Figure 5 illustrates a first embodiment proposed by the invention. In this embodiment, it is showed the operation status verification process with NCP fraud protection based on NFC cards. This operation is proposed by the first server 300 attached to the account management. The user 100, using for example a browser 101, requests to execute an operation related with an account (A) of the first server 300. This operation may include to be logged in a particular service or to execute some other action related with the services provided by first server (e.g. Internet payment with a credit card). So once user existence has been validated (B) by said first server 300, the latter makes the correspondence of the operation requested with the scheme entry in the hierarchy defined by this user's account (D) and demands to the browser 101 the information needed to perform the operation (E). The user 100 sends the operation information to the first server 300 (F). Once the operation information is received, the first server 300 requests the status for this operation to the second server 200 (G).

Then the second server 200 initializes the credentials exchange before evaluating the scheme entry status from the root to the entry (H). The status of the user's account is retrieved and if it is unlocked the same evaluation is performed with every step founded until reach the scheme entry. The scheme entry status information is sent (I) and, with this information, the first server 300 makes the decision of allowing or blocking the user access to the operation. At this point, the first server is informed if the CNP presence is pending on user action. If this presence is confirmed then the first server waits to receive the callback that informs about the result of the integrity verification.

Optionally, if the scheme entry status is valid (unlocked) and the second factor of authentication is activated, the second server 200 can send an OTP to the first server 300 within the answer of the status request. This first server 300 has to employ it to complete the authentication. The first server 300 requests to the user 100 the OTP that is going to be a temporal second factor (K). The second server 200 sends the same OTP to the to the user's dedicated program 102 (J). The user 100 recovers the OTP from the dedicated program 102 and introduce it in the browser 101 (L) and sends it to the first server 300 (M). The first servers can check if the OTP sent through the browser 101 matches with the one received with the account status (N).

If the operation is pending of the user's authentication through the presence of the NFC token, the first server 300, which is waiting for a callback from the second server 200, informs the user 100 that the operation is pending of authentication (O). Asynchronously, the second server 200 requests to the user 100 through the dedicated program 102 to prove the possession of the NFC token (Q). Once the user 100 presents this token A using the dedicate program 102 (R), the second server 200 checks if the information related with the NFC token received matches (S) with the information previously registered about the token associated with this operation. Then, the second server 200 can callback the first server 300 to communicate the results of this verification process (T). The first server 300 can complete the operation information needed to perform the requested action (U).

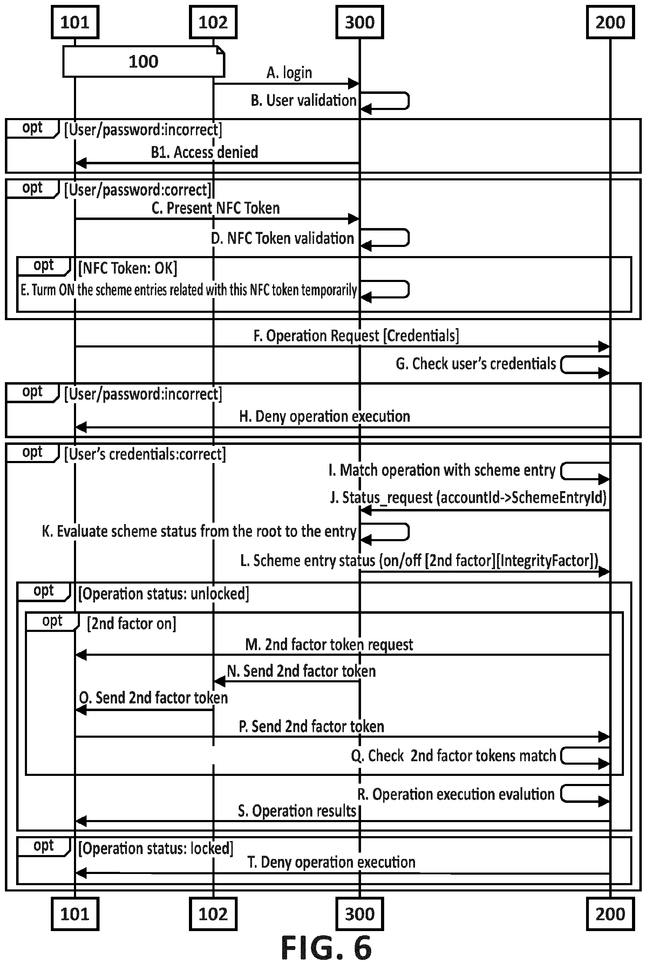

Figure 6 illustrates a second embodiment proposed by the invention for CNP fraud mitigation. In this case the figure illustrates the whole process followed by the invention. It is showed an alternative to CNP fraud protection based on the use of NFC cards. The goal of this protection is to increase the security level in some particular operations. This operation is proposed by the first server 100 attached to the account management.

An example to illustrate how this option differs from the embodiment described in figure 5, is to consider a user 100 who is going to carry out a transaction through a website using their credit card in a web browser 101. When the website requests the number of the card to complete the transaction, the user 100 can unblock the Internet transaction operation defined for user's credit card, just by logging in the user's dedicated program 102 and presenting there the NFC token associated with the operation. This change of status can be set to be temporal (i.e. only a few minutes). Said figure 6 illustrates where in an operation request made by the user 100 can be placed the NFC interaction. However, this interaction is asynchronous so it can be performed in any moment before the first server 300 requests the operation status to said second server 200.

Once a user 100 wants to execute one of these operations, he or she logs in the said second server 200 (A, B) and presents the NFC Card. Previously, the NFC token contained in the NFC card was associated to the said operation. This supposes that whenever the NFC token is sent to said second server 200 (C), and after a validation process (E), all the operations associated with the NFC token become active (E). When a time prefixed expires the second server 200 returns all these operation to their previous status.

The user 100, using for example a browser 101, requests, according to an embodiment, to execute an operation associated with a service (F) of a first server 300. Once the user existence has been validated (G) by said first server 300, the latter resolves the correspondence of this operation with one of the entries included in the authorization scheme (I) and demands to the second server 200 the user account status (J). Then the second server 200 initializes the credentials exchange before the account status information is sent (L). With this information, the first server 300 makes the decision of allowing or blocking the user access.

Optionally, if the scheme entry status is valid (unlocked) and the second factor of authentication is activated, within the answer of the request, the second server 200 sends an OTP to the first server 300 that has to employ to complete the authentication. The first server 300 requests to the user 100 the OTP that is going to be a temporal second factor (M). Then the second server 200 sends the same OTP to the user's dedicated program 102 (N). The user 100 recovers the OTP from the dedicated program 102 and introduce it in the browser 101 (O) and sends it to the first server 300 (P). The first server 300 can check if the OTP sent using the browser 101 matches with the one received with the account status (Q). Depending on of the results of this verification, the first server 300 performs the authorization process (R) and communicates the result to the user through the browser 101 (S).

The scope of the present invention is defined in the following set of claims.

**Claims**

1. A computer implemented method to prevent attacks against authorization systems, wherein a second server (200), in connection with a computing device of a user (100), via a second dedicated program (102) installed in said computing device, is used to manage a status of the accounts the user (100) has in a first server (300) and a status of the operations defined for a particular account, said account status and said operation status being set, whenever the user (100) wants, as valid or as invalid by the user (100) via the second dedicated program (102) and stored in a memory of the second server (200), and said account status and said operation status being set by the user (100) once a pairing process with the second server (200) being completed, said pairing process ensuring privacy to the user (100), the method comprising:

   - receiving, by said first server (300), from the user (100) using a first dedicated program including a browser (101), a request to be logged into a service of said first server (300), said request including the provision of identification information validating the identity of the user (100) in the first server (300);
   - once user existence has been validated by the first server (300), receiving, by said second server (200), from said first server (300), a request about a status regarding an account of the user (100) in the first server (300);
   - in response to receiving the request, initializing a first credential exchange between said first server (300) and said second server (200) in order to provide mutual authentication, the first credential exchange being performed via an authentication procedure based on certificates' exchange;
   - verifying, by the second server (200), said account status;
   - sending, by said second server (200), said account status to said first server (300); and
   - using, by said first server (300), said received account status for:

      ◦ authorizing said service login request if said account status is set as valid, or
      ◦ rejecting said service login request if said account status is set as invalid,

   wherein in response to said service login request being authorized, a further request is done by the user (100) via the first dedicated program (101) to perform an operation related to said account of the user (100) in the first server (300), the method further comprises following steps:

      - determining, by the first server (300), what entry in a scheme of an hierarchy defined by said account corresponds with said requested operation;
      - associating, either by the first server (300) or by the user (100) via the second dedicated program (102), at least a hardware token such as a Near Field Communication, NFC, card to said requested operation to prevent Card Not Present, CNP, fraud;
      - requesting, by said first server (300), to said second server (200), the operation status defined by the user (100) over said entry;
      - initializing a second credential exchange between the first server (300) and the second server (200);
      - evaluating, by the second server (200), a scheme entry status information from a root of said hierarchy scheme to said entry;
      - sending, by the second server (200), the result of said scheme entry status information evaluation to the first server (300), and
      - using, by the first server (300), the result of said evaluation for allowing or blocking said requested operation.

2. A computer implemented method according to claim 1, comprising previous to said step of associating the hardware token, demanding, by said first server (300), to said user (100), information needed to perform said operation and performing said requesting of the operation status upon said first server (300) having received said information needed.

3. A computer implemented method according to previous claims, wherein in said step of sending, by the second server (200), the result of said scheme entry status information, an indication about use of a card confirming a physical presence action of said user (100) is also sent using the second dedicated program (102).

4. A computer implemented method according to claim 3, wherein if said use of a card confirming a physical presence action of the user has been indicated as happening, said second server (200) comprises:

   - requesting to said user (100) through said second dedicated program (102) to send said hardware token;
   - checking whether said hardware token received through the second dedicated program (102) matches with said associated hardware token concerning said operation; and
- establishing the state of said operation taking into account the result of said checking.

5. A computer implemented method according to claim 1, wherein in said step of associating said hardware token, this hardware token is associated by introduction of the user (100) in said second server (200) and validated by the second server (200).

6. A computer implemented method according to previous claims, further comprising using a second factor authentication if said scheme entry status is set as valid, said second factor authentication comprising:

- sending, by said second server (200), an OTP to the first server (300) within the answer of the request;
- requesting, by the first server (300), to the user (100), an OTP that the user (100) is going to use as temporal second factor;
- sending, by the second server (200), the same OTP sent to the first server (300) to the user through said first dedicated program (101);
- recovering, by the user (100), said requested temporal second factor OTP through said second dedicated program (102), introducing it into the first dedicated program (101) and further sending the requested temporal second factor OTP via said first dedicated program (101) to the first server (300); and
- checking, by the first server (300), if the received OTP from the second server (200) and the received temporal second factor OTP from said first dedicated program (101) matches in order to allowing or blocking said requested operation.

7. A computer implemented method according to claim 1, wherein said step of evaluating is performed for every step founded until reach the scheme entry.

8. A computer implemented method according to claim 1, comprising notifying, by said second server (200), the user (100) in case said service login request is rejected.

9. A computer implemented method according to claim 8, wherein said notifying comprises one of a sending of a Short Message Service (SMS), a sending of an email, a sending of a message by a smartphone messenger application, a highlighting or pushing in said dedicated program (102) of said user computing device.

10. A computer implemented method according to claim 1, wherein said account status is set as valid or as invalid a certain period of time.

11. A computer implemented method according to claim 1, wherein said request to be logged into a service and/or said request to perform an operation are recorded in order to provide statistics.

12. A computer program comprising computer program code means adapted to perform the steps according to the method of claim 1 when said program is run on a computer, a digital signal processor, a field-programmable gate array, an application-specific integrated circuit, a micro-processor, a micro-controller, or any other form of programmable hardware.

13. A computer program according to claim 12, further comprising program code means adapted to perform a second factor authentication according to the method of claim 6.

**Patentansprüche**

1. Computerimplementiertes Verfahren zur Verhinderung von Angriffen auf Autorisierungssysteme, wobei ein zweiter Server (200) in Verbindung mit einer Rechenvorrichtung eines Benutzers (100) über ein zweites dediziertes Programm (102), das in der genannten Rechenvorrichtung installiert ist, verwendet wird, um einen Zustand der Accounts, die der Benutzer (100) auf einem ersten Server (300) hat, und einen Zustand der für einen bestimmten Account definierten Vorgänge zu verwalten, wobei der genannte Accountzustand und der genannte Vorgangszustand immer dann, wenn der Benutzer (100) es wünscht, über das zweite dedizierte Programm (102) durch den Benutzer (100) als gültig oder ungültig gesetzt und in einem Speicher des zweiten Servers (200) gespeichert werden, und wobei der genannte Accountzustand und genannte Vorgangszustand durch den Benutzer (100) dann gesetzt werden, sobald ein Paarungsprozess mit dem zweiten Server (200) erfolgt ist, wobei der genannte Paarungsprozess dem

**EP 2 860 935 B1**

Benutzer (100) den Datenschutz sichert, wobei das Verfahren umfasst:

- Empfangen durch den genannten ersten Server (300) einer Anforderung vom Benutzer (100) mithilfe eines ersten dedizierten Programms (101), welches einen Browser beinhaltet, in einen Dienst des genannten ersten Servers (300) eingeloggt zu werden, wobei die genannte Anforderung das Bereitstellen von Identifikationsinformationen beinhaltet, die die Identität des Benutzers (100) beim ersten Server (300) bestätigen;
- sobald die Benutzerexistenz durch den ersten Server (300) überprüft wurde, Empfangen einer Anforderung seitens des genannten zweiten Servers (200), vom genannten ersten Server (300) über einen Zustand eines Accounts des Benutzers (100) auf dem ersten Server (300);
- als Reaktion auf das Empfangen der Anforderung Initialisieren eines ersten Legitimationsaustauschs zwischen dem genannten ersten Server (300) und dem genannten zweiten Server (200) zur Bereitstellung gegenseitiger Authentifizierung, wobei der erste Legitimationsaustausch über ein Authentifizierungsverfahren basierend auf dem Austausch von Zertifikaten erfolgt;
- Überprüfen des genannten Accountzustands durch den zweiten Server (200);
- Senden des genannten Accountzustands über den genannten zweiten Server (200) an den genannten ersten Server (300); und
- Verwenden des empfangenen genannten Accountzustands durch den genannten ersten Server (300) zum:

  ∘ Autorisieren der genannten Dienst-Login-Anforderung, wenn der genannte Accountzustand als gültig gesetzt ist, oder
  ∘ Ablehnen der genannten Dienst-Login-Anforderung, wenn der genannte Accountzustand als ungültig gesetzt ist,

wobei als Reaktion auf die Autorisierung der genannten Dienst-Login-Anforderung eine weitere Anforderung durch den Benutzer (100) über das erste dedizierte Programm (101) zur Durchführung eines Vorgangs im Zusammenhang mit dem genannten Account des Benutzers (100) auf dem ersten Server (300) erfolgt, wobei das Verfahren ferner folgende Schritte umfasst:

- Bestimmen, durch den ersten Server (300), welcher Eintrag in einem Schema einer durch den genannten Account definierten Hierarchie dem genannten angeforderten Vorgang entspricht;
- Zuordnen, entweder durch den ersten Server (300) oder durch den Benutzer (100) über das zweite dedizierte Programm (102), mindestens eines Hardware-Tokens wie einer Nahfeldkommunikationskarte (NFC-Karte) mit dem genannten angeforderten Vorgang, um das Ergebnis 'Karte nicht vorhanden' (CNP), 'Betrug' zu verhindern;
- Anfordern des vom Benutzer (100) bezüglich des genannten Eintrags festgelegten Vorgangszustands durch den genannten ersten Server (300) beim genannten zweiten Server (200);
- Initialisieren eines zweiten Legitimationsaustauschs zwischen dem ersten Server (300) und dem zweiten Server (200);
- Auswerten einer Schema-Eintragsstatusinformation durch den zweiten Server (200) von einem Stamm des genannten Hierarchieschemas zum genannten Eintrag;
- Senden des Ergebnisses der genannten Auswertung der Schema-Eintragsstatusinformation durch den zweiten Server (200) an den ersten Server (300); und
- Verwenden des Ergebnisses der genannten Auswertung durch den ersten Server (300) zum Zulassen oder Blockieren des genannten angeforderten Vorgangs.

**2.** Computerimplementiertes Verfahren nach Anspruch 1, umfassend vor dem genannten Schritt des Zuordnens des Hardware-Tokens das Anfordern von zum Ausführen des genannten Vorgangs benötigten Informationen durch den genannten ersten Server (300) beim genannten Benutzer (100) und Durchführen der genannten Anforderung des Vorgangszustands sobald der genannte erste Server (300) die genannten benötigten Informationen empfangen hat.

**3.** Computerimplementiertes Verfahren nach vorstehenden Ansprüchen, wobei in dem genannten Schritt des Sendens durch den zweiten Server (200) ebenfalls das Ergebnis der genannten Schema-Eintragsstatusinformation, eine Meldung über die Verwendung einer Karte, die eine Handlung mit physischer Präsenz des genannten Benutzers (100) bestätigt, über das zweite dedizierte Programm (102) gesendet wird.

**4.** Computerimplementiertes Verfahren nach Anspruch 3, wobei, wenn die genannte Verwendung einer Karte, die eine Handlung mit physischer Präsenz des Benutzers bestätigt, als Ereignis gemeldet wurde, der genannte zweite Server (200) folgendes umfasst:

- Aufforderung an den genannten Benutzer (100) durch das genannte zweite dedizierte Programm (102), das genannte Hardware-Token zu senden;
- Prüfen, ob das durch das zweite dedizierte Programm (102) empfangene genannte Hardware-Token mit dem auf den genannten Vorgang bezogenen, genannten zugeordneten Hardware-Token übereinstimmt; und
- Festlegen des Zustands des genannten Vorgangs unter Berücksichtigung des Ergebnisses der genannten Prüfung.

5. Computerimplementiertes Verfahren nach Anspruch 1, wobei in dem genannten Schritt des Zuordnens des genannten Hardware-Tokens der Hardware-Token durch Eingabe des Benutzers (100) in den genannten zweiten Server (200) zugeordnet und durch den zweiten Server (200) validiert wird.

6. Computerimplementiertes Verfahren nach vorstehenden Ansprüchen, ferner umfassend die Verwendung einer Zweitfaktor-Authentifizierung, wenn der genannte Schema-Eintragsstatus als gültig eingestuft ist, wobei die genannte Zweitfaktor-Authentifizierung unfasst:

- Senden eines OTP an den ersten Server (300) durch den genannten zweiten Server (200) innerhalb der Antwort auf die Anforderung;
- Anfordern eines OTP beim Benutzer (100), durch den ersten Server (300), das der Benutzer (100) als temporären Zweitfaktor verwenden wird;
- Senden desselben, an den ersten Server (300) gesendeten OTP durch den zweiten Server (200) an den Benutzer (100) über das genannte erste dedizierte Programm (101);
- Abrufen des genannten angeforderten temporären Zweitfaktor-OTP durch den Benutzer (100) über das genannte zweite dedizierte Programm (102), Einfügen desselben in das erste dedizierte Programm (101) und ferner Senden des angeforderten temporären Zweitfaktor-OTP über das genannte erste dedizierte Programm (101) an den ersten Server (300); und
- Überprüfen, durch den ersten Server (300), ob das vom zweiten Server (200) eingegangene OTP mit dem vom genannten ersten dedizierten Programm (101) eingegangenen temporären Zweitfaktor-OTP übereinstimmt, um den genannten angeforderten Vorgang zuzulassen oder zu blockieren.

7. Computerimplementiertes Verfahren nach Anspruch 1, wobei der genannte Schritt des Auswertens für jeden bis zum Erreichen des Schema-Eintrags gebildeten Schritt durchgeführt wird.

8. Computerimplementiertes Verfahren nach Anspruch 1, umfassend die Benachrichtigung des Benutzers (100) durch den genannten zweiten Server (200), falls die genannte Dienst-Login-Anforderung abgelehnt wird.

9. Computerimplementiertes Verfahren nach Anspruch 8, wobei die genannte Benachrichtigung mindestens eines der folgenden umfasst: Senden einer Kurzmitteilung (SMS), Senden einer E-Mail, Senden einer Nachricht durch eine Smartphone-Messenger-Anwendung, Hervorheben oder Einschieben im genannten dedizierten Programm (102) der genannten Rechenvorrichtung des Benutzers.

10. Computerimplementiertes Verfahren nach Anspruch 1, wobei der genannte Accountzustand für einen bestimmten Zeitraum als gültig oder ungültig gesetzt wird.

11. Computerimplementiertes Verfahren nach Anspruch 1, wobei die genannte Anforderung, in einen Dienst des ersten Servers (300) eingeloggt zu werden und/oder die genannte Anforderung, einen Vorgang durchzuführen, erfasst werden, um Statistiken bereitzustellen.

12. Computerprogramm, umfassend Computerprogrammcodemittel, die so ausgelegt sind, dass sie die Schritte gemäß dem Verfahren nach Anspruch 1 ausführen, wenn das genannte Programm auf einem Computer, einem digitalen Signalprozessor, einer feldprogrammierbaren Gate-Anordnung, einem anwendungsspezifischen integrierten Schaltkreis, einem Mikroprozessor, einem Mikrocontroller oder einer anderen Form von programmierbarer Hardware ausgeführt wird.

13. Computerprogramm nach Anspruch 12, ferner umfassend Programmcodemittel, die zum Durchführen einer Zweitfaktor-Authentifizierung gemäß dem Verfahren nach Anspruch 6 ausgelegt sind.

**Revendications**

1. Procédé mis en oeuvre par ordinateur pour empêcher des attaques dirigées contre des systèmes d'autorisation, dans lequel un deuxième serveur (200), en liaison avec un dispositif informatique d'un utilisateur (100), via un deuxième programme dédié (102) installé dans ledit dispositif informatique, est utilisé pour gérer un état des comptes que l'utilisateur (100) a dans un premier serveur (300) et un état des opérations définies pour un compte particulier, ledit état de compte et ledit état d'opération étant définis, chaque fois que l'utilisateur (100) le souhaite, comme valide ou comme invalide par l'utilisateur (100) via le deuxième programme dédié (102) et stockés dans une mémoire du deuxième serveur (200), et ledit état de compte et ledit état d'opération étant définis par l'utilisateur (100) une fois qu'un processus de couplage avec le deuxième serveur (200) est terminé, ledit processus de couplage assurant une confidentialité à l'utilisateur (100), le procédé comprenant :

   - recevoir, par ledit premier serveur (300), à partir de l'utilisateur (100) en utilisant un premier programme dédié comprenant un navigateur (101), une demande de connexion à un service dudit premier serveur (300), ladite demande comprenant la fourniture d'information d'identification validant l'identité de l'utilisateur (100) sur le premier serveur (300) ;
   - une fois que l'existence de l'utilisateur a été validée par le premier serveur (300), recevoir, par ledit deuxième serveur (200), à partir dudit premier serveur (300), une demande concernant un état concernant un compte de l'utilisateur (100) dans le premier serveur (300) ;
   - en réponse à la réception de la demande, initialiser un premier échange d'informations d'identification entre ledit premier serveur (300) et ledit deuxième serveur (200) afin de fournir une authentification mutuelle, le premier échange d'informations d'identification étant effectué via une procédure d'authentification basée sur l'échange de certificats ;
   - vérifier, par le deuxième serveur (200), ledit état de compte ;
   - envoyer, par ledit deuxième serveur (200), ledit état de compte audit premier serveur (300) ; et
   - utiliser, par ledit premier serveur (300), ledit état de compte reçu pour :

      ◦ autoriser ladite demande de connexion de service si ledit état de compte est défini comme valide, ou
      ◦ rejeter ladite demande de connexion de service si ledit état de compte est défini comme invalide,

   dans lequel, en réponse à ladite demande de connexion de service étant autorisée, une autre demande est effectuée par l'utilisateur (100) via le premier programme dédié (101) pour effectuer une opération liée audit compte de l'utilisateur (100) dans le premier serveur (300), le procédé comprend en outre les étapes suivantes :

   - déterminer, par le premier serveur (300), quelle entrée dans un schéma d'une hiérarchie définie par ledit compte correspond à ladite opération demandée ;
   - associer, soit par le premier serveur (300) soit par l'utilisateur (100) via le deuxième programme dédié (102), au moins un jeton de hardware tel qu'une carte de communication en champ proche, NFC, à ladite opération demandée pour empêcher une fraude sans présence de la carte, CNP ;
   - demander, par ledit premier serveur (300), audit deuxième serveur (200), l'état d'opération défini par l'utilisateur (100) sur ladite entrée ;
   - initialiser un deuxième échange d'informations d'identification entre le premier serveur (300) et le deuxième serveur (200);
   - évaluer, par le deuxième serveur (200), une information d'état d'entrée de schéma depuis une racine dudit schéma hiérarchique vers ladite entrée ;
   - envoyer, par le deuxième serveur (200), le résultat de ladite évaluation d'information d'état d'entrée de schéma au premier serveur (300), et
   - utiliser, par le premier serveur (300), le résultat de ladite évaluation pour permettre ou bloquer ladite opération demandée.

2. Procédé mis en oeuvre par ordinateur selon la revendication 1, comprenant, avant ladite étape d'associer le jeton de hardware, demander, par ledit premier serveur (300), audit utilisateur (100), de l'information nécessaire pour exécuter ladite opération et exécuter ladite demande de l'état d'opération après que ledit premier serveur (300) aie reçu ladite information nécessaire.

3. Procédé mis en oeuvre par ordinateur selon les revendications précédentes, dans lequel dans ladite étape d'envoyer, par le deuxième serveur (200), le résultat de ladite information d'état d'entrée de schéma, une indication sur l'utilisation d'une carte confirmant qu'une action de présence physique dudit utilisateur (100) est également envoyée en utilisant le deuxième programme dédié (102).

4. Procédé mis en oeuvre par ordinateur selon la revendication 3, dans lequel si ladite utilisation d'une carte confirmant qu'une action de présence physique de l'utilisateur a été indiquée comme se produisant, ledit deuxième serveur (200) comprend :

- demander audit utilisateur (100) par l'intermédiaire dudit deuxième programme dédié (102) d'envoyer ledit jeton de hardware ;
- vérifier si ledit jeton de hardware reçu par l'intermédiaire du deuxième programme dédié (102) correspond audit jeton de hardware associé concernant ladite opération ; et
- établir l'état de ladite opération en tenant compte du résultat de ladite vérification.

5. Procédé mis en oeuvre par ordinateur selon la revendication 1, dans lequel, dans ladite étape d'associer ledit jeton de hardware, ce jeton de hardware est associé par introduction de l'utilisateur (100) dans ledit deuxième serveur (200) et validé par le deuxième serveur (200).

6. Procédé mis en oeuvre par ordinateur selon les revendications précédentes, comprenant en outre l'utilisation d'une authentification de deuxième facteur si ledit état d'entrée de schéma est défini comme valide, ladite authentification de deuxième facteur comprenant :

- envoyer, par ledit deuxième serveur (200), un OTP au premier serveur (300) dans la réponse de la demande ;
- demander, par le premier serveur (300), à l'utilisateur (100), un OTP que l'utilisateur (100) va utiliser comme deuxième facteur temporel :
- envoyer, par le deuxième serveur (200), le même OTP envoyé au premier serveur (300) à l'utilisateur par ledit premier programme dédié (101);
- récupérer, par l'utilisateur (100), ledit OTP de deuxième facteur temporel demandé par l'intermédiaire dudit deuxième programme dédié (102), l'introduire dans le premier programme dédié (101) et envoyer en outre l'OTP de deuxième facteur temporel demandé via ledit premier programme dédié (101) au premier serveur (300) ; et
- vérifier, par le premier serveur (300), si l'OTP reçu à partir du deuxième serveur (200) et l'OTP de deuxième facteur temporel reçu à partir dudit premier programme dédié (101) sont les mêmes afin de permettre ou de bloquer ladite opération demandée.

7. Procédé mis en oeuvre par ordinateur selon la revendication 1, dans lequel ladite étape d'évaluation est effectuée pour chaque étape fondée jusqu'à atteindre l'entrée du schéma.

8. Procédé mis en oeuvre par ordinateur selon la revendication 1, comprenant la notification, par ledit deuxième serveur (200), de l'utilisateur (100) au cas où ladite demande de connexion de service est rejetée.

9. Procédé mis en oeuvre par ordinateur selon la revendication 8, dans lequel ladite notification comprend un parmi un envoi d'un service de messages courts (SMS), un envoi d'un courrier électronique, un envoi d'un message par une application de messagerie pour téléphone intelligent, une mis en évidence ou une poussée dans ledit programme dédié (102) dudit dispositif informatique de l'utilisateur.

10. Procédé mis en oeuvre par ordinateur selon la revendication 1, dans lequel ledit état de compte est défini comme valide ou comme invalide pendant une certaine période de temps.

11. Procédé mis en oeuvre par ordinateur selon la revendication 1, dans lequel ladite demande de connexion à un service et/ou ladite demande d'effectuer une opération sont enregistrées afin de fournir des statistiques.

12. Programme informatique comprenant des moyens de code de programme informatique adaptés pour exécuter les étapes selon le procédé de la revendication 1 lorsque ledit programme est exécuté sur un ordinateur, un processeur de signaux numériques, un réseau de portes programmables sur site, un circuit intégré spécifique d'application, un microprocesseur, un microcontrôleur ou toute autre forme de hardware programmable.

13. Programme informatique selon la revendication 12, comprenant en outre des moyens de code de programme adaptés pour effectuer une authentification de deuxième facteur selon la revendication 6.

**FIG. 1**

**FIG. 2**

EP 2 860 935 B1

**FIG. 3**

FIG. 4

**FIG. 5**

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011072507 A1

- US 2003046551 A1

### Non-patent literature cited in the description

- The quest to replace passwords: A framework for comparative evaluation of web authentication schemes. **BONNEAU, J. ; HERLEY, C. ; VAN OOR-SCHOT, P. C. ; STAJANO, F.** In Security and Privacy (SP), 2012 IEEE Symposium on (pp. 553-567). IEEE, May 2012
- **BURR, W. E. ; DODSON, D. F. ; POLK, W. T.** Electronic authentication guideline. NIST, 2006, vol. 800, 63
- Preventing Authentication & Access Control Vulnerabilities in Web Application. **DALTON, M. ; KOZY-RAKIS, C. ; ZELDOVICH, N. ; NEMESIS.** In Proceedings of the 18th conference on USENIX security symposium. USENIX Association, 267-282
- **EVANS, D. ; BOND, P. ; BEMENT, A.** Security Requirements for Cryptographic Modules. *FIPS PUB 140-2 - FEDERAL INFORMATION PROCESSING STANDARDS PUBLICATION, http://csrc.nist.gov/publications/fips/fips140-2/fips 1402.pdf*
- **MCGLOIN M. ; HUNT P.** *OAuth 2.0 Threat Model and Security Considerations,* January 2013, ISSN 2070-1721, http://tools.ietf.org/pdf/rfc6819.pdf.
- Static detection of Access control vulnerability in web applications. **SUN, F. ; XU, L. ; SU,Z.** Proceedings of the 20th USENIX conference on Security. USENIX, August 2011, 11-11
- **WANG, R. ; ZHOU, Y. ; CHEN, S. ; QADEER, S. ; EVANS, D. ; GUREVICH, Y.** Explicating SDKs: Uncovering Assumptions Underlying Secure Authentication and Authorization. *Microsoft Research Technical Report MSR-TR-2013,* 2013, vol. 37